# EUROPÄISCHE PATENTSCHRIFT

(11) **EP 3 216 615 B1**
(45) Veröffentlichungstag und Bekanntmachung des Hinweises auf die Patenterteilung: **07.11.2018**
(21) Anmeldenummer: 17154782.1
(22) Anmeldetag: 06.02.2017
(51) Int. Cl.: B41F 27/00, B41F 33/00, B41J 11/00, B41J 13/22

(54) **BOGENDRUCKMASCHINE MIT SENSORSYSTEM SOWIE VERFAHREN ZUM KALIBRIERREN UND JUSTIEREN DES SENSORSYSTEMS**
SHEET PRINTING DEVICE WITH SENSOR SYSTEM, METHOD FOR CALIBRATING AND ADJUSTING THE SENSOR SYSTEM
MACHINE D'IMPRESSION À FEUILLES AVEC SYSTEME DE CAPTEUR, PROCÉDÉ D'ÈTALONNAGE ET D'AJUSTAGE DU SYSTEME DE CAPTEUR

(30) Priorität: 03.03.2016 DE 102016203479
(43) Veröffentlichungstag der Anmeldung: 13.09.2017
(73) Patentinhaber: Heidelberger Druckmaschinen AG, 69115 Heidelberg (DE)
(72) Erfinder: HENN, Andreas, 69151 Neckargemünd (DE); SCHMIDT, Thomas, 69123 Heidelberg (DE); KABUS, Wolfgang, verstorben (DE); KNAUF, Stefan, 69115 Heidelberg (DE); RITZ, Jürgen, 69234 Dielheim (DE); LORENZ, Olaf, 67112 Mutterstadt (DE); BULL, Christian, 69226 Nußloch (DE); MÜNCH, Stefan, 69124 Heidelberg (DE); GÖBEL, Thomas, 69242 Mühlhausen (DE)

(56) Entgegenhaltungen:
- DE-A1- 19 707 660
- JP-A- 2012 166 347

## Beschreibung

Die Erfindung betrifft eine Bogendruckmaschine mit den kennzeichnenden Merkmalen von Anspruch 1, ein Verfahren zum Kalibrieren eines Sensorsystems mit den Merkmalen von Anspruch 7 und ein Verfahren zum Justieren eines Sensorsystems mit den Merkmalen von Anspruch 9.

### Stand der Technik

Zum Bedrucken von Bogen aus Papier, Karton und Pappe in kleinen Auflagen oder mit individuellen Druckmotiven ist der Einsatz von Digitaldruckmaschinen bekannt. Beim Einsatz von Inkjetköpfen zum Bedrucken der Bogen wird ein jeweiliger Bogen von einem Transportsystem in einem minimalen Abstand unter den Inkjetköpfen hindurch bewegt. Als Transportsysteme sind umlaufende Transportbänder, beispielsweise ausgeführt als Saugbänder, und rotierende Zylinder, sogenannte Jettingzylinder, oder umlaufende Tablets wie z.B. in der US 8,579,286 B2 beschrieben, bekannt.
Bei Maschinenkonzepten unter Verwendung von Zylindern, wie beispielsweise in der
US 2009/0284561 A1 beschrieben, sind oberhalb eines Jettingzylinders radial beabstandet mehrere Inkjetdruckköpfe angeordnet, welche in geringem Abstand zu den Druckköpfen vorbeibewegte Bogen bedrucken. Auf einem Jettingzylinder können mehrere Bogen gleichzeitig angesaugt und transportiert werden. Um eine hohe Druckqualität sicherzustellen und Beschädigungen der Druckköpfe zu vermeiden ist es wichtig, dass ein jeweiliger Bogen gut auf dem Jettingzylinder aufliegt.
Zusätzlich ist es bekannt den Bogenlauf zu überwachen und fehlerhafte Bogen oder fehlerhaft aufliegende Bogen zu detektieren. Um eine Beschädigung der hochempfindlichen Druckdüsen eines Inkjetkopfes durch z.B. hochstehende Ecken, Kanten oder Falten zu verhindern, wird gewöhnlich die Druckmaschine angehalten und der fehlerhafte Bogen entfernt.

Eine solche Druckmaschine ist in der US 2013/0307893 A1 beschrieben. Wird von einem den Inkjetköpfen vorgelagerten Sensor ein fehlerhafter Bogen detektiert, so wird nicht nur die Maschine angehalten, sondern werden auch alle Inkjetköpfe angehoben und damit in eine Rückzugsposition verbracht. Sodann können die fehlerhaften Bogen problemlos vom Maschinenbediener entfernt werden.
Im Stand der Technik sind unterschiedlichste Sensorsysteme zur Überwachung von Bogen in Druckmaschinen bekannt. So ist beispielsweise in der DE 197 07 660 A1 ein Lichtvorhang beschrieben, welcher unterhalb einer Wendetrommel einer Bogendruckmaschine angeordnet ist, zur Überwachung des Bogenwendebereichs. Sender und Empfänger dieses Sensorsystems sind antriebs- und bedienseitig, auf beiden Seiten der Wendetrommel angeordnet.
Ein Sensor zur Überwachung des Bogenlaufs in einer Digitaldruckmaschine geht aus der EP 2 562 107 B1 hervor.

Die JP 2012 166347 A beschreibt eine Bogendruckmaschine mit einem Druckzylinder und einem Sensorsystem, wobei das Sensorsystem im Bogenlaufbereich angeordnet ist und einen Sender auf der einen Stirnseite sowie einen Empfänger auf der anderen Stirnseite des Druckzylinders besitzt. An dem Druckzylinder ist mindestens eine Messlehre angebracht, welche von dem Sensorsystem erfassbar ist.

Ungenauigkeiten der Sensorsysteme können einerseits dazu führen, dass fehlerhafte Bogen nicht erkannt werden. Andererseits können Gutbogen fälschlicher Weise als fehlerhafte Bogen detektiert werden.

### Aufgabenstellung

Aufgabe der vorliegenden Erfindung ist es eine Bogendruckmaschine mit einem Sensorsystem höherer Genauigkeit zu schaffen und jeweils ein Verfahren zum Kalibrieren und Justieren eines Sensorsystems zu beschreiben.

Gelöst wird diese Aufgabe durch eine Bogendruckmaschine mit den Merkmalen von Anspruch 1. Die erfindungsgemäße Bogendruckmaschine besitzt, einen Druckzylinder und ein Sensorsystem zur Überwachung des Bogenlaufs im Bereich des Druckzylinders, wobei das Sensorsystem einen Lichtvorhang mit einer Vielzahl von Laserstahlen aufweist. Auf Grund der Verwendung eines Lichtvorhanges an Stelle eines einzelnen Lichtstrahls kann der Bogenlauf von Bogen unterschiedlicher Dicke überwacht werden. Das Sensorsystem ist im Bogenlaufbereich angeordnet und besitzt einen Sender und einen Empfänger, wobei der Sender auf der einen Stirnseite und der Empfänger auf der anderen Stirnseite des Druckzylinders angeordnet ist, das heißt die Blickrichtung des Sensorsystems ist im Wesentlichen rechtwinklig zu einer Transportrichtung der Bogen. In anderen Worten: Sender und Empfänger sind stirnseitig zum Druckzylinder angeordnet, auf der Antriebsseite und auf der Bedienseite. Erfindungsgemäß ist an dem Druckzylinder mindestens eine Messlehre angebracht, welche von dem Sensorsystem erfassbar ist. Besonders vorteilhaft ist es wenn das Sensorsystem selbstkalibrierend ausgestaltet ist.

Bei einer derartigen Bogendruckmaschine ist eine Autokalibration des Sensorsystems, das heißt eine vollautomatische Kalibrierung des Sensorsystems möglich, auch als Kalibration bezeichnet. Durch die Verwendung der Messlehren und ein kontinuierliches Nachkalibrieren des Sensorsystems können Drifterscheinungen, zum Beispiel aufgrund von Wärmedehnungen der Seitenwände der Bogendruckmaschine oder von Halterungen des Sensorsystems kompensiert werden. In der Folge wird die Fehlerrate des Sensorsystems deutlich herabgesetzt und nur tatsächlich fehlerhafte Bogen werden zuverlässig erkannt.

In vorteilhafter Weiterbildung der erfindungsgemäßen Bogendruckmaschine bildet die Messlehre über dem Drehwinkel des Druckzylinders verschiedene Bogendicken ab, das heißt, einem bestimmten Maschinenwinkel und damit einem bestimmten Drehwinkel des Druckzylinders wird ein bestimmter Bogendicke-Messwert der Messlehre zugeordnet. So ist einem bestimmen Drehwinkel ϕ ein bestimmter Bogendicke-Messwert h durch die kurvenförmige oder stufenförmige Oberkante der Messlehre zugeordnet.

In vorteilhafter Weise kann die Messlehre bzw. können die Messlehren in einem oder jedem Kanal des Druckzylinders, oder auch neben dem Kanal angebracht sein. Bevorzugt wird die Anordnung der Messlehren in einem Kanal des Druckzylinders, da so ein kollisionsfreier Umlauf des Druckzylinders am einfachsten garantiert werden kann.

Weiter wird es als vorteilhaft angesehen, wenn mindestens zwei Messlehren vorgesehen sind, wobei mindestens eine Messlehre auf der einen Seite und mindestens eine weitere Messlehre auf der anderen Seite des Druckzylinders angeordnet ist. In anderen Worten: Eine der Messlehren ist eher antriebsseitig, die andere Messlehre eher bedienseitig angeordnet.

In Weiterbildung sind die mindestens zwei Messlehren versetzt zueinander in den Kanälen des Druckzylinders angeordnet, das heißt, die Messlehren sind mit einem Winkelversatz zueinander angebracht. Dies ermöglicht beide Messlehren mit dem Sensorsystem zu vermessen und so eine achsparallele Ausrichtung des Sensorsystems zum Druckzylinder.

Die Erfindung betrifft auch ein Verfahren zum Kalibrieren eines Sensorsystems gemäß Anspruch 7. Bei dem Verfahren wird immer der Höhenwert der Messlehre zu einem bestimmten Drehwinkel des Druckzylinders mit seiner Messlehre gemessen, zum Beispiel bei einem Drehwinkel ϕ 0,6, was einer gewünschten Bedruckstoffdickenüberwachung von zum Beispiel 0,6 mm entspricht. Das heißt, Bogen mit größerer Dicke , z.B. auf Grund eines Bogenfehlers (Bogenlagefehler, Eselsohr, Falte...) sollen von dem Sensorsystem detektiert werden. Der vom Sensorsystem an der Messlehre bestimmte Messwert wird sodann für die Überwachung der Bedruckstoffdicke verwendet, als sogenannter Schwellwert. Dazu wird der Schwellwert in der Sensorsteuerung hinterlegt. Liegt ein Messwert einer gemessenen Bedruckstoffdicke über dem hinterlegten Schwellwert, so gilt dieser Bogen als Fehlbogen. Bei jedem Durchlauf der Messlehre wird die Messlehre vom Sensorsystem erneut gemessen und der so erhaltene Messwert wird als neuer Schwellwert in der Sensorsteuerung hinterlegt und für die Überwachung der Bogen verwendet.

Die Erfindung betrifft auch ein Verfahren zum Justieren eines Sensorsystems gemäß Anspruch 9. Um das Sensorsystem zu justieren und den korrekten Abstand des Sensorsystems zum Druckzylinder einzustellen, zum Beispiel zur Überwachung einer bestimmten Bogendicke von beispielsweise 0,6 mm, wird betrachtet, bei welchem Drehwinkel das Sensorsystem bedämpft wird. Es müsste in diesem Beispiel bei einem Winkel ϕ 0,6mm bedämpft werden. Wird es jedoch hingegen bei einem Winkel ϕ 0,3mm bedämpft, so muss das Sensorsystem noch um einen Weg von 0,3 mm verschoben werden.

Das vorgenannte Verfahren zum Justieren kann sowohl bei der Inbetriebnahme als auch im laufenden Betrieb der Bogendruckmaschine Anwendung finden.

Bei der Fertigung der Messlehren kann es zu fertigungstoleranzbedingten Abweichungen kommen, welche das Messergebnis des Sensorsystems zu sehr beeinträchtigen würden. Daher können die Abweichungen der beiden Messlehren vorher vermessen werden und im Weiteren Berücksichtigung finden. So werden die Abweichungen beim Justieren des Sensorsystems berücksichtigt, so dass dieses trotzdem parallel zum Druckzylinder ausgerichtet wird. Auch im laufenden Betrieb und beim Kalibrieren finden die Abweichungen Berücksichtigung, um mit einer höheren Genauigkeit messen zu können. Dazu sind die Abweichungen in der Sensorsteuerung hinterlegt.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll an Hand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.

Es zeigen in schematischer Darstellung
- Fig. 1a und b: den Vorgang zum Justieren des Sensorsystems
- Fig. 1c: Messlehren fürs Justieren
- Fig. 2a und b: die Verwendung von Messlehren zum permanenten Kalibrieren des Sensorsystems
- Fig. 3: das Sensorsystem mit nur einer Messlehre
- Fig. 4: eine Digitaldruckmaschine mit einem Sensorsystem zur Überwachung des Bogenlaufs

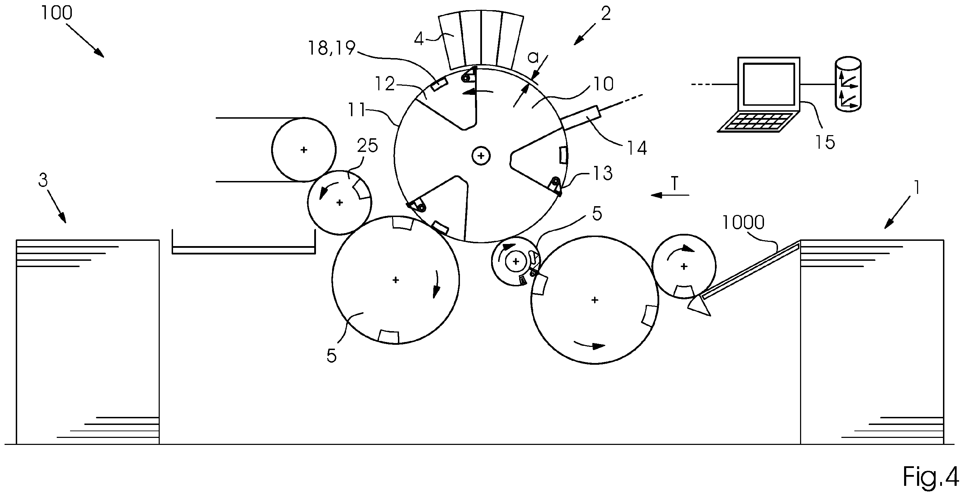

Figur 4 zeigt eine Bogendruckmaschine 100, welche ausgeführt ist als Digitaldruckmaschine. Ein jeweiliger Bogen 1000 wird von einem Anleger 1 kommend in Transportrichtung T durch ein Druckwerk 2 zu einem Ausleger 3 transportiert. Der Transport eines jeweiligen Bogens 1000 erfolgt dabei vornehmlich mittels Zylindern, nämlich Transferzylindern 5 und einem Druckzylinder 10. Oberhalb des Druckzylinders 10 sind in einem Abstand a zum Druckzylinder 10 Inkjetköpfe 4 angeordnet, welche einen durch den Druckzylinder 10 in geringem Abstand vorbeibewegten Bogen 1000 bedrucken. Der Druckzylinder 10 wird daher auch als Jettingzylinder bezeichnet.

In der dargestellten Ausführungsform besitzt der Druckzylinder 10 drei Bogenhaltebereiche 11, welche jeweils durch einen Kanal 12 voneinander getrennt sind. Die Bogen 1000 werden mittels Greifern 13 auf den Bogenhaltebereichen 11 gehalten. In den Kanälen 12 sind Messlehren 18, 19 vorgesehen.

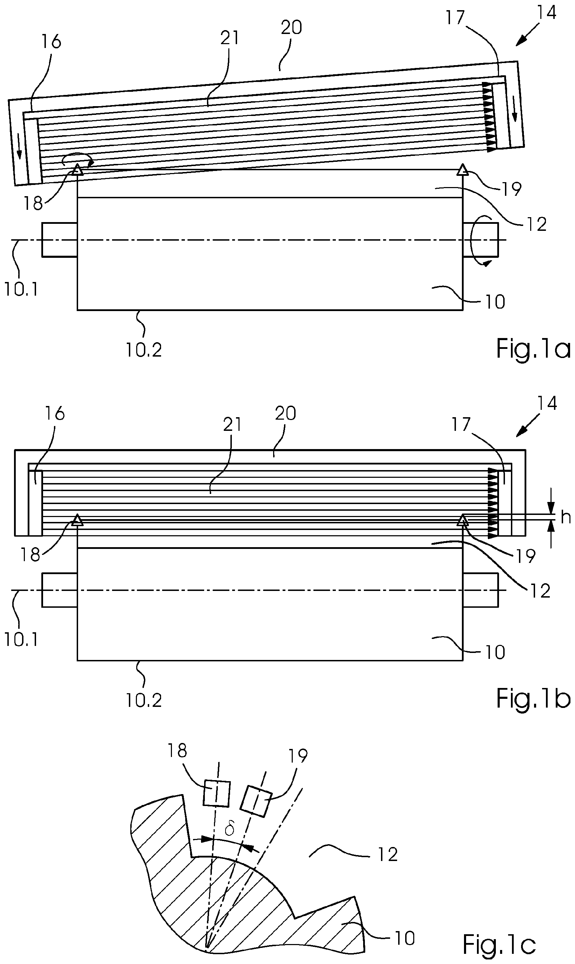

Zur Ansteuerung der Druckmaschine 100 ist eine Maschinensteuerung 15 mit Bedienerinterface und Speicher vorgesehen. In Transportrichtung T gesehen stromaufwärtig der Inkjetköpfe 4 ist ein Sensorsystem 14 angeordnet, welches der permanenten Überwachung der Bogen 1000 und der Messlehren 18, 19 dient. Das Sensorsystem 14 ist dazu im Bogenlauf angeordnet. Überwacht werden kann der Bogenlauf, insbesondere die Bedruckstoffdicke d, d.h. wie weit die Bogen 1000 über die Bogenhaltebereiche 11 hinausstehen. Knicke, Eselsohren, gefaltete, gewellte, unvollständig oder schlecht gehaltene Bogen 1000 können so erkannt werden. Das Sensorsystem 14 ist datenübertragungstechnisch mit der Maschinensteuerung 15 verbunden, welche auch eine Sensorsteuerung umfasst.
Das Sensorsystem 14 muss weit genug stromaufwärtig der Inkjetköpfe 4 angeordnet sein, damit selbst bei einem Fehler an der Bogenhinterkante noch eine Kollision von Bogen 1000 und Inkjetköpfen 4 vermieden werden kann, z.B. durch Anhalten der Maschine 100, Anheben der Inkjetköpfe 4 oder Ausschleusen des fehlerbehafteten Bogens 1000 (nicht dargestellt).
Stromabwärtig nach dem Jettingzylinder 10 befindet sich eine Ausschleustrommel 25, mittels welcher Fehlbogen ausgeschleust werden können, z.B. unvollständig bedruckte Bogen 1000.
Aus den Figuren 1a und 1b ergibt sich das Verfahren zum Justieren eines Sensorsystems 14. Das Sensorsystem 14 besitzt einen Sender 16 und einen Empfänger 17, wobei der Sender 16 auf der einen Seite des Druckzylinders 10 und der Empfänger 17 auf der anderen Seite des Druckzylinders 10 positioniert ist, und ein Lichtvorhang 21 aufgespannt wird. Sender und Empfänger können von einem Haltebügel 20 aufgenommen sein. Der Haltebügel 20 des Sensorsystems 14 wird von einem nicht näher dargestellten Maschinengestell der Druckmaschine 100 aufgenommen und kann relativ zu diesem verstellt werden. In dem Kanal 12 des Druckzylinders 10 sind Messlehren 18, 19 vorgesehen. Die Messlehre 18 ist dabei am antriebsseitigen Ende des Kanals 12 und die Messlehre 19 am bedienerseitigen Ende des Kanals 12 positioniert. Wie sich aus der stark übertriebenen Darstellung von Figur 1a deutlich ergibt, ist das Sensorsystem 14 nicht parallel zur Achse 10.1 und zur Mantelfläche 10.2 des Druckzylinders 10 ausgerichtet. Eine Justierung des Sensorsystems 14 kann nun erfolgen, indem das Sensorsystem 14 bedienerseitig stärker abgesenkt wird als antriebsseitig. Das heißt, es erfolgt eine Absenkung des Sensorsystems 14 so weit, bis an den beiden Messlehren 18, 19 derselbe Wert gemessen wird. Die Messlehren 18, 19 sind dazu, wie in Figur 1c dargestellt, mit einem Winkelversatz δ zueinander angeordnet. Das Ergebnis dieses Justierverfahrens ist in Figur 1b dargestellt. Das Sensorsystem 14 ist nun parallel zur Mantelfläche und zur Achse des Druckzylinders 10 ausgerichtet.

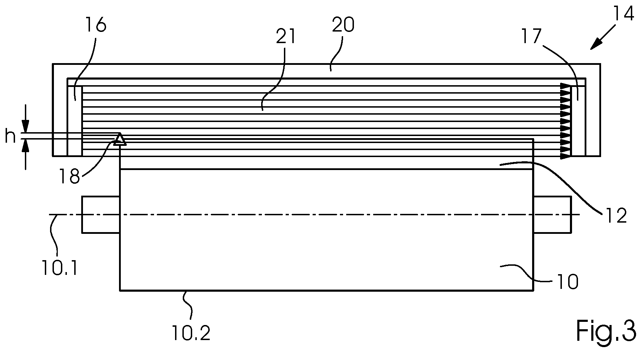

Werden zwei Messlehren 18, 19 vorgesehen, so kann auch im Betrieb eine zunehmende Schrägstellung des Sensorsystems 14 erkannt und diese von der Maschinensteuerung 15 korrigiert oder zumindest dem Maschinenbediener angezeigt werden.
Ist nur eine Messlehre 18 vorgesehen, vgl. Fig. 3, so kann eine Schrägstellung nicht erkannt werden.
Ein weiteres Justieren des Sensorsystems 10 kann erforderlich sein, wenn der Abstand des Sensorsystems 14 von der Mantelfläche des Druckzylinders 10 nicht richtig ist. Dann kann auch keine zutreffende Überwachung des Bogenlaufs durch das Sensorsystem 14 erfolgen. Um auch hier eine Justierung des Sensorsystems 14 vorzunehmen, wird der Abstand des Sensorsystems 14 zum Druckzylinder 10 so lange korrigiert, bis die zu mindestens einer Messlehre 18, 19 aufgenommenen Messwerte des Sensorsystems 14 den in einer Steuerung 15 hinterlegten Sollwerten entsprechen.

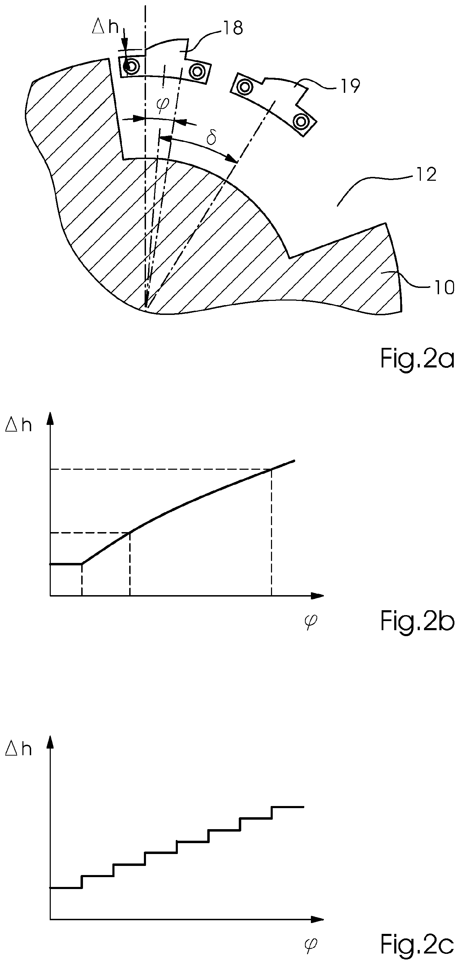

Aus den Figuren 2a bis 2c ergibt sich der Aufbau der Bogendruckmaschine im Bereich der Messlehren und das Verfahren zum Kalibrieren des Sensorsystems 14. Die Messlehren 18, 19 sind in einem Kanal 12 des Druckzylinders 10 angebracht und mit diesem verbunden. Es können auch Messlehren 18, 19 in jedem Kanal 12 des Druckzylinders 10 vorgesehen sein. Dabei ist eine Messlehre 18 am einen Ende des Kanals 12 und die andere Messlehre 19 am anderen Ende des Kanals 12 angeordnet, das heißt, eine Messlehre 18 ist antriebsseitig und eine Messlehre 19 ist bedienseitig positioniert. Zusätzlich sind die Messlehren 18, 19 versetzt zueinander im Kanal mit einem Winkelversatz δ zueinander angeordnet. Die Oberkante einer jeweiligen Messlehre 18, 19 bildet dabei eine Kurve. Durch diese Kurve wird einem bestimmten Maschinenwinkel bzw. Drehwinkel ϕ eine bestimmte Bogenhöhe h zugeordnet. Wie sich aus der Darstellung von Figur 2b ergibt, ist beispielsweise durch die Kurve der Messlehre 18, 19 einem Drehwinkel ϕ 0,3 mm eine Bogendicke h 0,3 mm und einem Drehwinkel ϕ 0,6 mm eine Bogendicke h 0,6 mm zugeordnet. Jedem Drehwinkel ϕ ist wiederum in der Steuerung 15 ein Sollwert zugeordnet, welcher als Schwellwert für die Überwachung des Bogenlaufs verwendet wird. Ergibt sich bei der Vermessung der Messlehren 18, 19 bei der Umdrehung des Druckzylinders 10 ein von dem Sollwert abweichender Messwert, so wird der neue Messwert als Schwellwert in der Steuerung 15 hinterlegt, wodurch ein Kalibrieren des Sensorsystems 14 erfolgt.

Die Kurve der Messlehre 18, 19 kann alternativ auch unstetig und aus Stufen zusammengesetzt sein, wie in Fig. 2c dargestellt.

Vorteilhafter Weise können gemeinsame Messlehren 18, 19 zum Justieren und Kalibrieren vorgesehen sein. Die Messlehren 18, 19 können dazu Teilflächen aufweisen, welche von dem Sensorsystem 14 beim Justieren bzw. Kalibrieren erfasst werden.

### Bezugszeichenliste

- 1: Anleger
- 2: Druckwerk
- 3: Ausleger
- 4: Inkjetköpfe
- 5: Transferzylinder

- 10: Druckzylinder (Jettingzylinder)
- 10.1: Zylinderachse
- 10.2: Mantelfläche Zylinder
- 11: Bogenhaltebereich bzw. Bogenauflagefläche
- 12: Kanal
- 13: Greifer
- 14: Sensorsystem
- 15: Maschinensteuerung mit Sensorsteuerung
- 16: Sender
- 17: Empfänger
- 18: Messlehre (AS)
- 19: Messlehre (BS)
- 20: Aufnahmebügel
- 21: Lichtvorhang
- 25: Ausschleustrommel

- 100: Bogendruckmaschine
- 1000: Bogen

- a: Abstand
- h: Bogenhöhe
- T: Transportrichtung
- ϕ: Maschinenwinkel / Drehwinkel
- δ: Winkelversatz

## Patentansprüche

1. Bogendruckmaschine (100) mit einem Druckzylinder (10) und einem Sensorsystem (14) zur Überwachung des Bogenlaufs im Bereich des Druckzylinders (10),
wobei das Sensorsystem (14) im Bogenlaufbereich angeordnet ist und einen Sender (16) und einen Empfänger (17) besitzt, wobei der Sender (16) auf der einen Stirnseite und der Empfänger (17) auf der anderen Stirnseite des Druckzylinders (10) angeordnet ist, derart, dass die Blickrichtung des Sensorsystems (14) rechtwinklig zu einer Transportrichtung (T) der Bogen (1000) ist, wobei an dem Druckzylinder (10) mindestens eine Messlehre (18, 19) angebracht ist, welche von dem Sensorsystem (14) erfassbar ist,
**dadurch gekennzeichnet,**
**dass** das Sensorsystem (14) einen Lichtvorhang (21) mit einer Vielzahl von Laserstrahlen aufweist.

2. Bogendruckmaschine nach Anspruch 1,
**dadurch gekennzeichnet,**
**dass** das Sensorsystem (14) selbstkalibrierend ausgestaltet ist.

3. Bogendruckmaschine nach einem der vorangehenden Ansprüche,
**dadurch gekennzeichnet,**
**dass** die mindestens eine Messlehre (18, 19) über dem Drehwinkel (ϕ) verschiedene Bogenhöhen (h) abbildet.

4. Bogendruckmaschine nach einem der vorangehenden Ansprüche,
**dadurch gekennzeichnet,**
**dass** die mindestens eine Messlehre (18, 19) in einem Kanal (12) des Druckzylinders (10) oder neben dem Kanal (12) des Druckzylinders (10) angebracht ist.

5. Bogendruckmaschine nach einem der vorangehenden Ansprüche,
**dadurch gekennzeichnet,**
**dass** mindestens zwei Messlehren (18, 19) vorgesehen sind, wobei mindestens eine Messlehre (18) auf der einen Seite und mindestens eine weitere Messlehre (19) auf der anderen Seite des Druckzylinders (10) angeordnet ist.

6. Bogendruckmaschine nach Anspruch 5,
**dadurch gekennzeichnet,**
**dass** die mindestens zwei Messlehren (18, 19) versetzt mit einem Winkelsatz (δ) zueinander am Druckzylinder (10) angeordnet sind.

7. Verfahren zum Kalibrieren eines Sensorsystems (14) zur Überwachung des Bogenlaufs im Bereich des Druckzylinders (10) einer Bogendruckmaschine (100), wobei mindestens eine an dem Druckzylinder (10) angebrachte Messlehre (18, 19) bei Drehung des Druckzylinders (10) durch das Sensorsystem (14) erfasst wird und das Messergebnis mit einem in einer Sensorsteuerung (15) hinterlegten Sollwert verglichen wird, wobei in der Sensorsteuerung (15) einem bestimmten Drehwinkel (ϕ) ein bestimmter Sollwert als Messwert zugeordnet ist, und erforderlichenfalls zum Kalibrieren eine Korrektur des Sensorsystems (14) vorgenommen wird, nämlich dass bei Abweichung des Messwerts vom Sollwert der Messwert als Schwellwert für die Überwachung des Bogenlaufs in der Sensorsteuerung (15) hinterlegt wird .

8. Verfahren zum Kalibrieren nach Anspruch 7,
**dadurch gekennzeichnet,**
**dass** die Fertigungstoleranzen der Messlehren (18, 19) beim Kalibrieren berücksichtigt werden und den Sollwert mit bestimmen.

9. Verfahren zum Justieren eines Sensorsystems (14) zur Überwachung des Bogenlaufs von Bogen (1000) unterschiedlicher Dicke im Bereich des Druckzylinders (10) einer Bogendruckmaschine (100),
wobei mindestens zwei an dem Druckzylinder (10) angebrachte Messlehren (18, 19) durch das Sensorsystem (14) erfasst werden, wobei mindestens eine Messlehre (18) auf der einen Seite und mindestens eine weitere Messlehre (19) auf der anderen Seite des Druckzylinders (10) angeordnet ist,
wobei das Sensorsystem (14) einen Sender (16) und einen Empfänger (17) und einen Lichtvorhang mit einer Vielzahl von Laserstrahlen besitzt,
wobei der Sender (16) auf der einen Seite und der Empfänger (17) auf der anderen Seite des Druckzylinders (10) angeordnet ist,
wobei das Sensorsystem (14) auf der Senderseite und auf der Empfängerseite unabhängig zur Parallelstellung des Sensorsystems (14) verstellt wird, und wobei die Messwerte der Messlehren (18, 19) verglichen werden und bei Überschreitung eines in einer Maschinensteuerung (15) hinterlegten Schwellwertes eine Korrektur der Lage von Sender (16) und Empfänger (17) vorgenommen oder eine Warnung angezeigt wird.

10. Verfahren zum Justieren nach Anspruch 9,
**dadurch gekennzeichnet,**
**dass** die Fertigungstoleranzen der Messlehren (18, 19) beim Justieren berücksichtigt werden, so dass das Sensorsystem (14) parallel zum Druckzylinder (10) justiert wird.

## Claims

1. Sheet-fed printing machine (100) including a printing cylinder (10) and a sensor system (14) for monitoring sheet travel in the region of the printing cylinder (10), the sensor system (10) disposed in the sheet travel region and including an emitter (16) and a receiver (17), the emitter (16) disposed on one front face and the receiver (17) disposed on the other front face of the printing cylinder (10) in such a way that the sensing direction of the sensor system (14) is orthogonal to a direction of transport (T) of the sheets (1000), wherein at least one gauge (18, 19) that is readable by the sensor system (14) is disposed on the printing cylinder (10),
**characterized in**
**that** the sensor system (14) includes a light curtain (21) with a plurality of laser beams.

2. Sheet-fed printing machine according to claim 1,
**characterized in**
**that** the sensor system (14) is designed to be self-calibrating.

3. Sheet-fed printing machine according to any one of the preceding claims,
**characterized in**
**that** the at least one gauge (18, 19) indicates different sheet heights (h) above the angle of rotation (ϕ).

4. Sheet-fed printing machine according to any one of the preceding claims,
**characterized in**
**that** the at least one gauge (18, 19) is disposed in a gap (12) of the printing cylinder (10) or next to the gap (12) of the printing cylinder (10).

5. Sheet-fed printing machine according to any one of the preceding claims,
**characterized in**
**that** at least two gauges (18, 19) are provided, with at least one gauge (18) disposed on one side and at least one gauge (19) disposed on the other side of the printing cylinder (10).

6. Sheet-fed printing machine according to claim 5,
**characterized in**
**that** the at least two gauges (18, 19) are disposed on the printing cylinder (10) so as to be offset relative to one another at by an angular offset (δ).

7. Method for calibrating a sensor system (14) for monitoring sheet travel in the region of the printing cylinder (10) in a sheet-fed printing machine (100), wherein at least one gauge (18, 19) disposed on the printing cylinder (10) is scanned by the sensor system (14) when the printing cylinder (10) rotates, the measured result is compared to a target value saved on a sensor control unit (15), wherein a specific target value as a measured value is associated with a specific angle of rotation (ϕ) on the sensor control unit (15), and, if necessary, a correction is made to the sensor system (14) for calibration purposes in that when the measured value deviates from the target value, the measured value is saved on the sensor control unit (15) as a threshold for monitoring sheet travel.

8. Method for calibrating according to claim 7,
**characterized in**
**that** the manufacturing tolerances of the gauges (18, 19) are factored in during the calibration process and have an influence on the target value.

9. Method for adjusting a sensor system (14) for monitoring sheet travel of sheets (1000) of varying thickness in the region of the printing cylinder (10) of a sheet-fed printing machine (100),
wherein at least two gauges (18, 19) disposed on the printing cylinder (10) are scanned by the sensor system (14), wherein at least one gauge (18) is disposed on one side and at least one gauge (19) is disposed on the other side of the printing cylinder (10),
wherein the sensor system (14) includes an emitter (16) and a receiver (17) and a light curtain with a plurality of laser beams,
wherein the emitter (16) is disposed on one side and the receiver (17) is disposed on the other side of the printing cylinder (10),
wherein the sensor system (14) is adjusted independently on the emitter side and on the receiver side for a parallel setting of the sensor system (14), and
wherein the measured values of the gauges (18, 19) are compared and a correction of the positions of the emitter (16) and the receiver (17) are made or a warning is displayed when a threshold saved on the machine control unit (15) is exceeded.

10. Method for adjusting according to claim 9,
**characterized in**
**that** the manufacturing tolerances of the gauges (18, 19) are factored in during the adjustment process so that the sensor system (14) is adjusted to be parallel with the printing cylinder (10).

## Revendications

1. Machine d'impression à feuilles (100) avec un cylindre d'impression (10) et un système de détection (14) pour la surveillance du passage des feuilles dans la zone du cylindre d'impression (10), le système de détection (14) étant disposé dans la zone de passage des feuilles et possédant un émetteur (16) et un récepteur (17), l'émetteur (16) étant implanté sur une face et le récepteur (17) sur l'autre face du cylindre d'impression (10), de sorte que le champ de vision du système de détection (14) soit perpendiculaire à un sens de transport (T) des feuilles (1000), le cylindre d'impression (10) étant équipé d'au moins un calibre (18, 19), détectable par le système de détection (14),
**caractérisée par le fait,**
**que** le système de détection (14) présente un rideau lumineux (21) avec un grand nombre de rayons laser.

2. Machine d'impression à feuilles selon la revendication 1,
**caractérisée par le fait,**
**que** le système de détection (14) est à auto-calibrage.

3. Machine d'impression à feuilles selon l'une des revendications précédentes,
**caractérisée par le fait**
**que** le calibre au moins (18, 19) représente via l'angle de rotation (ϕ) différentes hauteurs de feuilles (h).

4. Machine d'impression à feuilles selon l'une des revendications précédentes,
**caractérisée par le fait,**
**que** le calibre au moins (18, 19) est implanté dans un canal (12) du cylindre d'impression (10) ou à côté du canal (12) du cylindre d'impression (10).

5. Machine d'impression à feuilles selon l'une des revendications précédentes,
**caractérisée par le fait**
**qu'**au moins deux calibres (18, 19) sont prévus, au moins un calibre (18) étant implanté d'un côté et au moins un autre calibre (19) de l'autre côté du cylindre d'impression (10).

6. Machine d'impression à feuilles selon la revendication 5,
**caractérisée par le fait**
**que** les deux calibres au moins (18,19) sont disposés décalés l'un par rapport à l'autre avec un jeu d'équerres (δ) sur le cylindre d'impression (10).

7. Procédé de calibrage d'un système de détection (14) pour la surveillance du passage des feuilles dans la zone du cylindre d'impression (10) d'une machine d'impression à feuilles (100), pour lequel au moins un calibre (18,19) implanté sur le cylindre d'impression (10) est enregistré lors de la rotation du cylindre d'impression (10) par le système de détection (14) et le résultat de la mesure comparé avec une valeur de consigne mémorisée dans une commande par détecteur (15), une valeur de consigne définie étant, dans la commande par détecteur (15), affectée comme valeur de mesure à un angle de rotation défini (ϕ), et si nécessaire, une correction du système de détection (14) étant effectuée pour le calibrage, notamment pour qu'en cas d'écart entre la valeur de mesure et la valeur de consigne, la valeur de mesure soit enregistrée comme valeur seuil pour la surveillance du passage des feuilles dans la commande par détecteur (15).

8. Procédé de calibrage selon la revendication 7,
**caractérisé par le fait,**
**que** les tolérances des calibres (18, 19) sont prises en compte lors du calibrage et contribuent à déterminer la valeur de consigne.

9. Procédé d'ajustage d'un système de détection (14) pour la surveillance du passage de feuilles (1000) d'épaisseur différente dans la zone du cylindre d'impression (10) d'une machine d'impression à feuilles (100), pour lequel au moins deux des calibres (18, 19) implantés sur le cylindre d'impression (10) sont enregistrés par le système de détection (14), pour lequel au moins un calibre (18) est implanté d'un côté et au moins un autre calibre (19) de l'autre côté du cylindre d'impression (10), pour lequel le système de détection (14) possède un émetteur (16) et un récepteur (17) et un rideau lumineux avec un grand nombre de rayons laser, pour lequel l'émetteur (16) est implanté d'un côté et le récepteur (17) de l'autre côté du cylindre d'impression (10), pour lequel le système de détection (14) est réglé côté émetteur et côté récepteur indépendamment de la position parallèle du système de détection (14), et pour lequel les valeurs de mesure des calibres (18, 19) sont comparées et une correction de la position de l'émetteur (16) et du récepteur (17) est effectuée ou un avertissement affiché en cas de dépassement d'une valeur seuil mémorisée dans une commande de la machine (15).

10. Procédé d'ajustage selon la revendication 9,
**caractérisé par le fait,**
**qu'**il faut tenir compte des tolérances de fabrication des calibres (18, 19) lors de l'ajustage, de façon que le système de détection (14) soit ajusté parallèlement au cylindre d'impression (10).
